# EUROPEAN PATENT SPECIFICATION

(11) **EP 1 282 260 B1**
(45) Date of publication and mention of the grant of the patent: **28.12.2005**
(21) Application number: 02016814.2
(22) Date of filing: 26.07.2002
(51) Int. Cl.: H04L 9/08

(54) **Key agreement method for secure communication system**
Verfahren zur Schlüsselübereinkunft in einem sicheren Kommunikationssystem
Methode pour convenir d'une clé pour un système de communication sécurisé

(30) Priority: 30.07.2001 DE 10137152
(43) Date of publication of application: 05.02.2003
(73) Proprietor: SCM Microsystems GmbH, 85737 Ismaning (DE)
(72) Inventor: Loisel, Yann, 13600 La Ciotat (FR)
(74) Representative: Degwert, Hartmut

(56) References cited:
- EP-A- 0 537 971
- EP-A- 0 739 106
- US-A- 5 371 794
- PATENT ABSTRACTS OF JAPAN vol. 1999, no. 13, 30 November 1999 (1999-11-30) & JP 11 234259 A (HITACHI LTD), 27 August 1999 (1999-08-27)
- MENEZES A.J.; OORSCHOT VAN P.; VANSTONE S.: 'HANDBOOK OF APPLIED CRYPTOGRAPHY' HANDBOOK OF APPLIED CRYPTOGRAPHY October 1996, pages 497-498 - 506-508, XP002182401

## Description

The present invention relates to a method of transmitting confidential data between two communication devices and, in particular, to a method of secure communication between a chipcard and a conditional access module (CAM) in a pay TV environment.

EP 0 720 326 A2 discloses a method of establishing a secure communication channel between two similar stations. The communication procedure uses symmetric encryption/decryption one to avoid problems encountered with earlier systems where a distributed master key is used in conjunction with modifier elements such as a time stamp, a counter or the like. In the symmetric procedure, a secret encryption key is known to both communication devices. This method only works with paired communication devices.

In another method that is disclosed in WO 97/38530, a secure communication between two devices such as a CAM and a chipcard is obtained by asymmetric encryption. One of the devices generates a random key which is encrypted with a public key and sent to the second device. The second device decrypts the encrypted key with a corresponding private key. Both devices use the random key for encryption and decryption of data exchanged between the devices. This method relies on a random value generated in only one of the devices.

EP-A-0 537 971 discloses a method of transmitting confidential data between two terminals in which a first random number is generated on the side of the first terminal, the first random number is decrypted with the public key before being transmitted to the second terminal, a second random number is generated on the side of the second terminal, the second random number is encrypted with the public key before being transmitted to the first terminal, the encrypted random numbers are exchanged and decrypted by means of the private keys and the random numbers are combined to a third random number to form a traffic key.

US-A-5,371,794 discloses a method for providing a secure communication between a base station and a mobile station in which random numbers RN1 and RN2 are generated on the side of the base station and the mobile station, the generated random numbers are encrypted with the public key of the mobile station and the public key of the base station, the encrypted random numbers are exchanged and decrypted by means of the private key of the mobile station and the private key of the base station, and a session key is generated by combining the first and second random numbers RN1 and RN2. In addition to the random numbers RN1 and RN2, a random chosen value CH1 is generated on the side of the mobile station arid is transmitted to the base station without being encrypted. The value CH1 is used in a signature calculation process for verifying the base signature.

In chapter 12 of the "Handbook of Applied cryptography" (Menezes, Van Oorschot, Vanstone) the Needham-Schroeder public-key protocol is disclosed according to which in a first step a secret symmetric session key k₁ of a device A is encrypted with the public key of a device B and transmitted from device A to device B. In a second step device B recovers the secret symmetric session key k₁ of device A, concatenates k₁ and a secret symmetric session k₂ of device B, encrypts the concatenated number with the public key of device A and sends the encrypted message to device A. In a third step device A decrypts the sent message using its private key, checks the key k₁ recovered agrees with that sent in the first step, encrypts the key k₁ using the public key of device B and sends the encrypted message to device B. In a fourth step device B decrypts the message using its private key and checks the key k₂ recovered agrees with that sent in the second step. A joint key to which devices A and B contribute is computed with the secret session keys k₁, k₂ using an appropriate publicly known non-reversible function f.

The present invention provides a secure method of transmitting data between two communication devices which relies on a common secret based on two values each of which is generated by a different one of the devices, thereby avoiding possible replay attacks. According to the invention, the method of transmitting data between two communication devices includes the following steps:
Step 1: a first random key is generated on the side of the first communication device.
Step 2: a second random key is generated on the side of the second communication device.
Step 3: the second random key is encrypted by means of a public key and transmitted to the first communication device.
Step 4: on the side of the first communication device, the transmitted second random key is decrypted with a corresponding private key.
Step 5: the first random key is encrypted on the side of the first communication device and transmitted to the second communication device.
Step 6: the second communication device decrypts the transmitted first random key.
Step 7: each communication device combines the random keys into a secret session key used for encryption and decryption of the data transmitted between the devices.

After step 7, both devices share a secret session key based on two random values generated independently of each other and in different devices, thereby excluding the possibility of a successful replay attack.

A particular encryption key for encryption of the first random key is used in steps 5 and 6: in addition to the second random key, a random number (a "challenge") is generated on the side of the second communication device, and this random number is likewise encrypted with the public key and transferred to the first communication device. The first communication device decrypts the random number with its private key, and the first random key is encrypted with the decrypted random number prior to the transmission of the first random key to the second communication device.

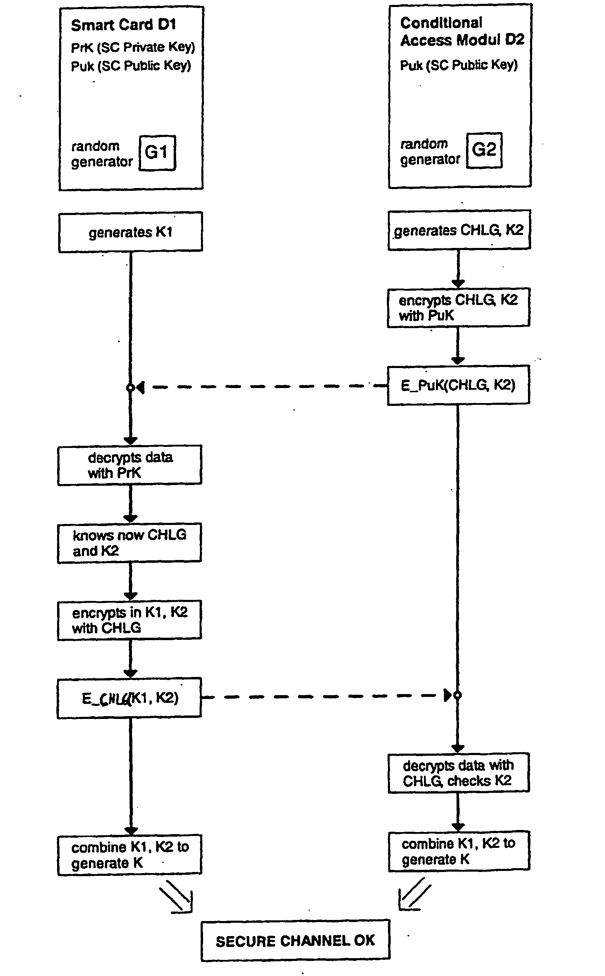

A preferred embodiment of the invention will now be disclosed with reference to the drawing. The single figure of the drawing illustrates essential steps of the preferred embodiment.

With reference to the drawing, a first communication device D1 is a Smart Card (SC) and a second communication device D2 is a conditional access module (CAM) in a digital pay TV environment (DVB, for example), although the invention is not limited to application in such an environment. Both devices D1 and D2 would exchange confidential data, such as entitlement management messages (EMMs), entitlement control messages (ECMs) and control words (CWs). To protect the confidential data from eavesdropping, a secure communication channel is established between the devices D1, D2.

The first device D1 owns a secret private key PrK and has a corresponding public key PuK. Device D1 also has a random number generator G1.

The second device D2 knows the public key PuK, which may have been received from device D1 in the clear. Device D2 also has a random number generator, G2.

Initially, both devices D1, D2 do not share any secret. In order to provide a secret session key shared by the devices and used for encryption/decryption of data exchanged between the devices, a protocol is proposed that is safe enough to avoid leakage of information, and powerful enough to exchange keys of a sufficient length. The protocol involves asymmetric cryptography for transmission both from D1 to D2 and from D2 to D1.

Random number generator G1 in device D1 internally generates a first random number K1. Random number generator G2 in device D2 internally generates a second random number K2. D2 will also generate a further random value, a "challenge" CHLG. Random numbers K1 and K2 are of a sufficient length to avoid crypto-analytic brute-force attack.

Device D2 encrypts K2 and CHLG with public key PuK and sends the result to device D1. Device D1 will receive the result and decrypt it with its private key PrK. Device D1 now knows K2 and CHLG. Device D1 concatenates K2 with its own random number K1 and encrypts the concatenated numbers with CHLG. The encrypted result is sent from D1 to D2.

Device D2 now decrypts the received result to K 1 and K2 using CHLG as the decryption key to retrieve K1 and K2. D2 checks for consistency of received K2 with its own K2. If the correct K2 has been received, both devices D1 and D2 now share both random numbers K1 and K2.

Finally, both devices D1 and D2 will combine random keys K1 and K2 in the same manner to provide a secret session key K now owned by both devices. Session key K is used for symmetric encryption and decryption of confidential data exchanged between the devices.

Another example for use of the invention is a conditional access module (CAM) as the first device D1 and a decoder in a Set-Top-Box (STB) as the second device D2. Here, too, confidential data would be exchanged using a session key for encryption/decryption that originates from two random numbers each generated in a different one of the devices.

## Claims

1. A method of transmitting confidential data between a smart card (D1) and a conditional access module (D2), in which
a) a first random key (K1) is generated on the side of the smart card (D1);
b) a second random key (K2) and a random number (CHLG) are generated on the side of the conditional access module (D2);
c) the second random key (K2) and the random number (CHLG) are encrypted by means of a public key (PuK) of the smart card (D1) and transmitted from the conditional access module (D2) to the smart card (D1);
d) on the side of the smart card (D1), the transmitted second random key (K2) and random number (CHLG) are decrypted using the corresponding private key (PrK);
e) the first random key (K1) and second random key (K2) are concatenated and are encrypted with the random number (CHLG) on the side of the smart card (D1) and transmitted to the conditional access module (D2);
f) the conditional access module (D2) decrypts the transmitted first random key (K1) and second random key (K2);
g) the conditional access module (D2) checks the integrity of the decrypted second random key (K2) by comparison with the original second random key (K2); and
h) both of the smart card (D1) and the conditional access module (D2) combine the random keys (K1, K2) to a secret session key (K) for use in symmetric encryption and decryption of the confidential data.

2. The method according to claim 1, in which the session key (K) is developed so as to have the same length as each of the first and second random keys (K1, K2).

3. The method according to claim 1 or 2, in which the first and second random keys (K1, K2) are each produced by a respective random number generator (G1, G2) of the smart card (D1) and of the conditional access module (D2).

## Patentansprüche

1. Verfahren zur Übertragung vertraulicher Daten zwischen einer Smart Card (D1) und einem Zugangsberechtigungsmodul (D2), bei welchem
a) auf der Seite der Smart Card (D1) ein erster Zufallsschlüssel (K1) generiert wird;
b) auf der Seite des Zugangsberechtigungsmoduls (D2) ein zweiter Zufallsschlüssel (K2) und eine Zufallszahl (CHLG) generiert werden;
c) der zweite Zufallsschlüssel (K2) und die Zufallszahl (CHLG) mit einem öffentlichen Schlüssel (PuK) der Smart Card (D1) verschlüsselt und vom Zugangsberechtigungsmodul (D2) zur Smart Card (D1) übertragen werden;
d) auf der Seite der Smart Card (D1) der übertragene zweite Zufallsschlüssel (K2) und die übertragene Zufallszahl (CHLG) unter Verwendung des entsprechenden privaten Schlüssels (PrK) entschlüsselt werden;
e) der erste Zufallsschlüssel (K1) und der zweite Zufallsschlüssel (K2) verkettet werden und auf der Seite der Smart Card (D1) mit der Zufallszahl (CHLG) verschlüsselt und zum Zugangsberechtigungsmodul (D2) übertragen werden;
f) das Zugangsberechtigungsmodul (D2) den übertragenen ersten Zufallsschlüssel (K1) und zweiten Zufallsschlüssel (K2) entschlüsselt;
g) das Zugangsberechtigungsmodul (D2) die Integralität des entschlüsselten zweiten Zufallsschlüssels (K2) durch Vergleich mit dem ursprünglichen zweiten Zufallsschlüssel (K2) überprüft; und
h) sowohl die Smart Card (D1) als auch das Zugangsberechtigungsmodul (D2) die Zufallsschlüssel (K1, K2) zu einem Geheimsitzungsschlüssel (K) zur Verwendung bei symmetrischer Verschlüsselung und Entschlüsselung der vertraulichen Daten kombinieren.

2. Verfahren nach Anspruch 1, bei welchem der Sitzungsschlüssel (K) mit gleicher Länge wie sowohl der erste als auch der zweite Zufallsschlüssel (K1, K2) gebildet wird.

3. Verfahren nach Anspruch 1 oder 2, bei welchem der erste und der zweite Zufallsschlüssel (K1, K2) jeweils mittels eines jeweiligen Zufallszahlengenerators (G1, G2) der Smart Card (D1) bzw. des Zugangsberechtigungsmoduls (D2) erzeugt werden.

## Revendications

1. Procédé de transmission de données confidentielles entre une carte à puce (D1) et un module d'accès conditionnel (D2), dans lequel
a) une première clé aléatoire (K1) est générée du côté de la carte à puce (D1);
b) une deuxième clé aléatoire (K2) et un nombre aléatoire (CHLG) sont générés du côté du module d'accès conditionnel (D2) ;
c) la deuxième clé aléatoire (K2) et le nombre aléatoire (CHLG) sont cryptés à l'aide d'une clé publique (PuK) de la carte à puce (D1) et sont transmis à la carte à puce (D1) par le module d'accès conditionnel (D2) ;
d) la deuxième clé aléatoire (K2) transmise et le nombre aléatoire (CHLG) transmis sont décryptés du côté de la carte à puce (D1) en utilisant la clé privée (PrK) correspondante ;
e) la première clé aléatoire (K1) et la deuxième clé aléatoire (K2) sont concaténées et sont cryptées avec le nombre aléatoire (CHLG) du côté de la carte à puce (D1) et sont transmises au module d'accès conditionnel (D2) ;
f) le module d'accès conditionnel (D2) décrypte la première clé aléatoire (K1) transmise et la deuxième clé aléatoire (K2) transmise ;
g) le module d'accès conditionnel (D2) vérifie l'intégralité de la deuxième clé aléatoire (K2) décryptée en la comparant à la deuxième clé aléatoire (K2) initiale ; et
h) tant la carte à puce (D1) que le module d'accès conditionnel (D2) combinent les clés aléatoires (K1, K2) pour obtenir une clé secrète de session (K) pour l'utilisation lors du cryptage et décryptage symétrique des données confidentielles.

2. Procédé selon la revendication 1, dans lequel la clé de session (K) est développée de telle sorte qu'elle a la même longueur que les première et deuxième clés aléatoires (K1, K2).

3. Procédé selon la revendication 1 ou 2, dans lequel les première et deuxième clés aléatoires (K1, K2) sont chacune produites par un générateur de nombre aléatoire (G1, G2) de la carte à puce (D1) et du module d'accès conditionnel (D2), respectivement.
